(19) **Europäisches Patentamt**
**European Patent Office**
**Office européen des brevets**

(11) Veröffentlichungsnummer: **0 245 208**
**B1**

(12) **EUROPÄISCHE PATENTSCHRIFT**

(45) Veröffentlichungstag der Patentschrift: **18.04.90**

(21) Anmeldenummer: **87810281.3**

(22) Anmeldetag: **01.05.87**

(51) Int. Cl.⁵: **C 08 K 13/04**, C 08 L 63/00, C 08 L 63/04 // (C08K13/04, 3:26, 5:29, 7:14)

(54) Glasfaserverstärkte Epoxidharzformmasse und deren Verwendung.

(30) Priorität: **07.05.86 CH 1865/86**

(43) Veröffentlichungstag der Anmeldung:
**11.11.87 Patentblatt 87/46**

(45) Bekanntmachung des Hinweises auf die
Patenterteilung:
**18.04.90 Patentblatt 90/16**

(84) Benannte Vertragsstaaten:
**CH DE ES FR GB IT LI NL**

(56) Entgegenhaltungen:
**DE-A-3 308 402**

**Chemical Abstracts, Band 83, Nr. 26, 29. Dezember 1975, Seite 52, Zusammenfassung Nr. 20724n, Columbus, Ohio, US; & JP-A-7572981 ( ARISAWA SEISAKUSHO K.K. ) 16-06-1975**

(73) Patentinhaber: **CIBA-GEIGY AG**
**Klybeckstrasse 141**
**CH-4002 Basel (CH)**

(72) Erfinder: **Ruf, Peter**
**Im Spiegelfeld 8**
**CH-4102 Binningen (CH)**

Courier Press, Leamington Spa, England.

**Beschreibung**

Die vorliegende Erfindung betrifft eine glasfaserverstärkte Epoxidharzformmasse auf Basis von Novolakepoxidharzen, enthaltend Dicyandiamid als Härtungsmittel, einen Härtungsbeschleuniger und Calciumcarbonat als Füllstoff, und deren Verwendung zur Herstellung von Kollektoren und Schleifringkörpern.

An Duroplastformmassen, die zur Herstellung von Kollektoren oder Schliefringkörpern verwendet werden, welche ihren Einsatz in Gleich- oder Wechselstrommaschinen bzw. Drehstrommaschinen finden, werden hohe Anforderungen bezüglich der Verarbeitbarkeit und der mechanischen Eigenschaften gestellt. Das heisst, die Duroplastformmassen müssen sich im Press-, Spritz- oder Spritzgiessverfahren gut verarbeiten lassen und nach der Aushärtung das Aufdornen auf die Ankerwelle, eine Aufweitung der Kollektorbohrung, und die Bearbeitung im Lötbad schadlos überstehen.

Bei der mechanischen Bearbeitung der Kollektoren bzw. Schleifringkörper, zum Beispiel durch Bohren, Fräsen oder Sägen, soll der Werkzeugverschleiss ausserdem möglichst gering sein. Schliesslich sollen die Kollektoren und Schleifringkörper bei hohen Drehzahlen eine lange Gebrauchsdauer und trotz der hohen Drehzahlen einen minimalen Lemellensprung aufweisen.

Aus ELECTRI·ONICS, Januar 1986, Seite 53—54, sind Kollektoren bekannt, welche als Kunststoffkern ein glasfaserverstärktes, mit Glimmer gefülltes Phenolharz enthalten. Solche Kollektoren weisen vor allem nachteilige Verarbeitungseigenschaften auf.

Aus der DE—OS 33 08 402 ist eine im Siebdruck verarbeitbare Reaktionsharzmasse auf Basis eines epoxidierten Novolaks und Dicyandiamid bekannt, die neben grossen Mengen an rheologischen Hilfsstoffen auch bis zu 12 Gew.-%. Calciumcarbonat und gegenbenenfalls bis zu 2 Gew.-% Glas- oder Kohlenstoffasern enthalten kann. Eine solche für den Siebdruck offenbarte Reaktionsharzmasse ist für die Herstellung von Kollektoren und Schleifringkörpern nicht geeignet.

Ferner wird in der DE—OS 26 07 551 eine Pulvermischung zur Herstellung von Schleifkörpern, die neben einem hohen Anteil an Schleifstoffen, wie Siliciumcarbıd, Aluminiumoxid oder Borcarbid, auch Calciumcarbonat und Geweberinge aus Glas enthalten kann, offenbart. Eine mechanische Bearbeitung von Kollektoren oder Schleifringkörpern, wie Fräsen oder Sägen, die eine solche Formmasse enthalten, ist nicht möglich.

Es wurde nun gefunden, dass glasfaserverstärkte, mit Calciumcarbonat gefüllte Epoxidiharzformmassen auf Basis von Phenol- oder Kresolnovolakepoxidharzen zur Herstellung von Kollektoren und Schleifringkörpern besser geeignet sind.

Gegenstand vorliegender Erfindung sind somit Epoxidharzformmassen, enthaltend

(a) ein Pheno- oder Kresolnovolakepoxidharz,

(b) Dicyandiamid als Härtungsmittel,

(c) einen für die Härtung mit Dicyandiamid geeigneten Beschleuniger,

(d) 20 bis 70 Gew.-% Calciumcarbonat,

(e) 10 bis 60 Gew.-% Glasfasern, wobei die Menge der Komponenten (d) und (e) zusammen höchstens 80 Gew.-% beträgt, bezogen auf das Gesamtgewicht der Epoxidharzformmasse und

(f) 0,2 bis 2,0 Gew.-% Formtrennmittel, bezogen auf das Gesamtgewicht der Epoxidharzformmasse.

Als Komponente (a) enthalten die erfindungsgemassen Formmassen vorzugsweise ein Kresolnovolakepoxidharz. Die Komponente (a) in den erfindungsgemässen Epoxidharzformmassen kann auch teilweise durch 0,1 bis 40 Gew.-%, vorzugsweise 5 bis 25 Gew.-%, bezogen auf die Gesamtmenge des Epoxidharzes, eines aromatischen Di- oder Polyglycidyläthers ersetzt sein. Als solche Glycidylverbindungen eignen sich beispielsweise die Diglycidyläther von Bisphenolen, wie Bis-(4-hydroxyphenyl)-methan (Bisphenol F), 2,2-Bis-(4-hydroxyphenyl)-propan (Bisphenol A), 2,2-Bis-(4-hydroxy-3,5-dibromophenyl)-propan (Tetrabrombisphenol A) oder Bis-(4-hydroxyphenyl)-sulfon. Geeignete Polyglycidyläther sind beispielsweise 1,1,2,2-Tetrakis-(4-glycidyloxyphenyl)-äthan, 1,3,5-Triglycidyloxybenzol. Solche Glycidylverbindungen sind bekannt und zum Teil im Handel erhältlich.

Vorzugsweise verwendet man als aromatischen Glycidyläther, die Diglycidyläther von Bisphenolen, insbesondere den Diglycidyläther des Bisphenol A.

In den erfindungsgemässen Formmassen verwendet man im allgemeinen 0,16 bis 0,5 Mol Dicyandiamid pro Epoxidäquivalent. Vorzugsweise setzt man das Dicyandiamid in solchen Mengen zu, dass in den erfindungsgemässen Formmassen pro Epoxidäquivalent 0,25 bis 0,35 Mol Dicyandiamid vorhanden sind.

Als Beschleuniger (c) setzt man die üblichen für die Härtung von Epoxidharzen mit Dicyandiamid bekannten Beschleuniger ein, wie beispielsweise Alkalimetallalkoholate, tertiäre Amine, Phosphine, wie Triphenylphosphin, quaternäre Ammoniumverbindungen, substitutierten Harnstoff, wie N-(4-Chlorphenyl)-N,N'-dimethylharnstoff oder N-(3-Chlor-4-methylphenyl)-N,N'-dimethylharnstoff, eine Mannichbase, wie 2,4,6-Tris-(dimethylaminomethyl)-phenol, Imidazol oder Imidazolderivate, wie 2-Methylimidazol, 2-Aethylimidazol, 2-Aethyl-4-methylimidazol, 2-Phenylimidazol oder Benzimidazol, und $BCl_3$- oder $BF_3$-Komplexe mit tertiären Aminen, wie Trimethylamin, Piperidin, Pyridin oder Hexamethylentetramin. Als Beschleuniger setzt man vorzugsweise eine Imidazol, insbesondere 2-Aethylimidazol, ein.

Die zu verwendende Menge des Härtungsbeschleunigers (c) ist dem Fachmann bekannt und hängt von der Anwendung des Formmasse ab. Im allgemeinen werden auf 100 Gewichtsteile Dicyandiamid 1—30 Gewichtsteile, vorzugsweise 3—20 Gewichtsteile und insbesondere 5—12 Gewichtsteile des Beschleunigers (c) eingestzt.

Bei dem erfindungsgemäss verwendeten Calciumcarbonat handelt es sich bevorzugt un feinteiliges und im wesentlichen wasserfreies Calciumcarbonat. Die Teilchengrösse des Calciumcarbonates kann z.B. 0,2—100 μm, vorzugsweise, 0,5—50 μm betragen.

Das in den erfindungsgemässen Formmassen enthaltende $CaCO_3$ kann zum Teil durch andere Füllstoffe ersetzt sein, wobei die Formmasse mindestens 30 Gew.-% Calciumcarbonat und 0,1 bis 40 Gew.-% Kaolin, Wollastonit, Dolomit, Bariumsulfat, Talk, Glimmer, oder Aluminiumoxidtrihydrat als weiteren Füllstoff enthält, wobei die Gesamtmenge der Füllstoffe höchstens 70 Gew.-% beträgt, bezogen auf das Gesamtgewicht der Epoxidharzformmasse.

Vorzugsweise enthält die erfindungsgemässe Formmasse, falls sie neben Calciumcarbonat einen weiteren Füllstoff enthält, mindestens 40 Gew.-% Calciumcarbonat und 0,1 bis 30 Gew.-% des zuvor genannten Füllstoffes, bezogen auf das Gesamtgewicht der Epoxidharzformmasse.

Als weiteren Füllstoff enthält die erfindungsgemässe Formmasse bevorzugt Kaolin.

Die besonders bevorzugte, erfindungsgemässe Formmasse enthält als Füllstoff nur Calciumcarbonat.

Als Glasfasern werden den erfindungsgemässen Formmassen, übliche, im Handel erhältliche, geschnittene Glasfasern (chopped strands) zugegeben. Als Glasfasern können auch gemahlene Glasfasern oder Glasrovings den erfindungsgemässen Mischungen zugegeben werden. Vorzugsweise werden geschnittene Glasfasern mit einer Länge von 0,1—30 mm verwendet.

Die Herstellung der erfindungsgemässen Formmassen kann in üblicher Weise mit Hilfe bekannter Mischaggregate, wie Kugelmühle, Kokneter, Walzenstuhl oder Extruder, erfolgen. Die erfindungsgemässen Formmassen können nach dem Trocken- oder Schmelzverfahren hergestellt werden. Auch ist es möglich, die Komponenten der erfindungsgemässen Formmassen in einem organischen Lösungsmittel zu vermischen und anschliessend unter Verdampfen des Lösungsmittel zu vermischen und anschliessend unter Verdampfen des Lösungsmittels zu trocknen. Dieses Mischverfahren ist bei der Verwendung von Glasrovings erforderlich.

Die Verarbeitung de erfindungsgemässen Formmassen erfolgt in üblicher Weise im Press-, Spritzpress- oder Spritzgiessverfahren. Dabei werden im allgemeinen Temperaturen von 140—200°C, vorzugsweise von 160—190°C, und Drücke von 300—2000 bar angewendet.

Den erfindungsgemässen Formmassen können ferner noch Formtrennmittel, wie OP-Wachs (Trennmittel de Fa. Hoechst), Montanwachs, Carnaubawachs, sowie Pigmente, Farbstoffe und Haftvermittler zugegeben werden. Die erfindungsgemässen Formmassen sind bevorzugt frei von Asbest und enthalten vorzugsweise Formtrennmittel in Mengen von 0,5 bis 1,5 Gew.-%, bezogen auf das Gesamtgewicht der Epoxidharzformmasse.

Wie eingangs erwähnt, sind die erfindungsgemässen Formmassen besonders zur Hertstellung von Kollektoren und Schleifringkörpern geeignet. Gegenstand vorliegender Erfindung sind somit auch die Verwendung der erfindungsgemässen Formmassen zur Herstellung von Kollektoren und Schleifringkörpern sowie die unter Verwendung der erfindungsgemässen Formmassen hergestellten Kollektoren oder Schleifringkörper.

Die erfindungsgemässen Formmassen finden bevorsugt als Pressmassen Anwendung.

In den Beispielen werden folgende Verbindungen bzw. Rohstoffe eingesetzt:

Epoxidharz A: Kresolnovolakepoxidharz mit einem Epoxidgehalt von 4,3 Aequivalenten/kg und einem Schmelzpunkt nach Kofler von 79°C.

Epoxidharz B: Phenolnovolakepoxidharz mit einem Epoxidgehalt von 5,4 Aequivalenten/kg und einem Erweichungspunkt von 66—77°C nach Durran.

Epoxidharz C: Gemisch aus Epoxidharz A und einem Bisphenol A-diglycidylätherharz mit einem Epoxidgehalt von 3,4 Aequivalenten/kg und einem Erweichungspunkt von 50°C nach Kofler, im Gewichtsverhältnis von 60:40.

Epoxidharz D: Gemisch aus Epoxidharz A und einem Bisphenol F-diclycidylätherharz mit einem Epoxidgehalt von 5,9 Aequivalenten/kg und einer Viskosität von 6600 mPa·s, im Gewichtsverhältnis von 93,4:6,4.

Beschleuniger 1: 2-Aethylimidazol

Beschleuniger 2: Gemisch aus 1 Gew.-Teil 2-Aethylimidazol und 3 Gewichtsteilen Phenolnovolak, das nach dem Zusammenschmelzen und Erkalten pulverisiert wurde

Beschleuniger 3: N-(Chlor-4-methylphenyl)-N,N'-dimethylharnstoff

Beschleuniger 4: Hexamethylentetramin

Härter: Dicyandiamid (1-Cyanoguanidin)

Glasfasern: Glasfasern geschnitten auf 4,5 mm Länge (chopped strands)

Glasrovings: (im Handel erhältlich)

Calciumcarbonat: Calcitmehl bzw. Kreidemehl, das im Handel unter der Bezeichnung OMYA® BSH (Plüss-Staufer AG) erhältlich ist.

Formtrennmittel: OP-Wachs (Hoechst)

Die in den folgenden Beispielen angewandten Prüfmethoden wurden wie folgt durchgeführt:

Lötbad: Die Temperatur des Blei-Zinn-Lötbades beträgt 350°C. Der die ausgehärtete Pressmasse

3

enthaltende Kollektor wird vollständig in das Lötbad eingetaucht und während 20 Sekunden gedreht.

Schleudertest: Der die ausgehärtete Pressmasse enthaltende Kollektor wird vor und nach dem Lötbad auf einer Schleudermaschine mit einer maximalen Drehzahl von 40000 Umdrehungen pro Minute (U/min), ausgerüstet mit elektronischem Tourenzähler und Digitalanzeige, getestet. Gemsessen wird die Drehzahl, bei der der Kollektor auseinanderfällt.

Aufdorntest: Ein Drehdorn mit einem Durchmesser von 15 mm wird in den die ausgehärtete Pressmasse enthaltenden Kollektor (Innendurchmesser 15 mm) gesteckt. Mittels einer Zug-Druckmaschine wird ein Drehdornkonus bis zum Bruch des Kollektors eingepresst. Aus dem Weg des Drehkonusses, bezogen auf die Konizität desselben, errechnet sich die Aufweitung des Kollektors in %.

Abrasionstest: Es werden aus der erfindungsgemässen Pressmasse DIN-Normstäbe der Grösse 120 × 15 × 10 mm auf die übliche Art hergestellt. Härtungsbedingungen: 10 Minuten bei 170°/1500 bar. Der Stab wird im Bohrständer der Länge nach so eingespannt, dass man die Bohrungen auf der 10 mm Seite setzen kann. Die regulierbare Bohrmaschine wird auf 1400 U/min eingestellt. Sie wird über einen Hebel mit 17,5 kg belastet. Zur Bohrung werden speziell 4 mm HSS-Bohrer (Hochleistungs-Schnell-Stahl) verwendet. Es werden 10 Bohrlöcher von 1 mm Tiefe gesetzt, wobei der Bohrer nach jeder Bohrung herausgenommen, in Wasser abgekühlt, getrocknet und wieder eingesetzt wird. Die Bewertung beim Abrasionstest erfolgt so, dass man die für die 10. Bohrung benötigte Zeit durch die für die 1. Bohrung benötigte Zeit dividiert. Der erhaltene Zahlenwert wird in Tabelle 2 als Faktor bezeichnet:

$$\frac{\text{Zeit für die 10. Bohrung}}{\text{Zeit für die 1. Bohrung}} = \text{Abrasionswert [Faktor]}.$$

Herstellung der Härtermasterbatches 1—3

Die verwendeten Verbindungen bzw. Rohstoffe werden in den in Tabelle 1 angegebenen Mengen in eine 5-Liter-Laborkugelmühle eingewogen und 16 Stunden gemahlen.

## Tabelle 1

| Härtermasterbatch Nr. | 1 | 2 | 3 |
|---|---|---|---|
| Glasfasern, gemahlen [Gew.-Teile] | 632 | 688 | - |
| Kaolin [Gew.-Teile] | - | - | 797,8 |
| Dicyandiamid, fein [Gew.-Teile] | 224 | 168 | 170,2 |
| Beschleuniger 2 [Gew.-Teile] | 100 | 100 | - |
| Formtrennmittel [Gew.-Teile] | 20 | 20 | - |
| Gasruss [Gew.-Teile] | 24 | 24 | 32 |

Herstellung der Pressmassen Nr. 1—3

Die Rohstoffe werden mit Ausnahme der Glasfasern in den in Tabelle 2 angegebenen Mengen in eine 5-Liter-Laborkugelmühle eingewogen und 8 Stunden gemahlen. Das so erhaltene pulverige Vorgemisch wird zusammen mit geschnittenen Glasfasern (4,5 mm Länge) in einem Laborkokneter bei 100°C verschmolzen und geknetet. Die austretende Masse wird abgekühlt, zu Granulat vermahlen und danach zu Tabletten verpresst, die in 170°C heissen Stahlpressformen bei 1500 bar zu Prüfkörpern verarbeitet werden. Die Presszeit beträgt bei der Herstellung der DIN-Normstäbe 10 Minuten und bei der Herstellung der Kollektoren 4 Minuten.

Herstellung der Pressmassen 4 und 5

Die Rohstoffe werden mit Ausnahme der Glasrovings in den in Tabelle 2 angegebenen Mengen in Aceton gelöst bzw. aufgeschlämmt. Durch diese Lösung bzw. Aufschlämmung werden die Glasrovings kontinuierlich durchgezogen, in einem Trockenturm mit Heissluft von etwa 200°C getrocknet, abgekühlt und dann zu Stäbchen von 3—25 mm Länge geschnitten. Die Verarbeitung der so erhaltenen Pressmassen zu Prüfkörpern und Kollektoren erfolgt analog den Pressmassen 1—3.

**Tabelle 2**

| Pressmasse Nr. | 1 | 2 | 3 | 4 | 5 |
|---|---|---|---|---|---|
| Epoxidharz A [Gew.-Teile] | 23,0 | 23,0 | – | – | 22,4 |
| Epoxidharz B [Gew.-Teile] | – | – | 23,0 | – | – |
| Epoxidharz C [Gew.-Teile] | – | – | – | 23,8 | – |
| Härtermasterbatch 1 [Gew.-Teile] | – | 12,5 | 12,5 | – | – |
| Härtermasterbatch 2 [Gew.-Teile] | 12,5 | – | – | – | – |
| Härtermasterbatch 3 [Gew.-Teile] | – | – | – | 10,1 | 12,1 |
| Beschleuniger 1 [Gew.-Teile] | – | – | – | 0,15 | 0,14 |
| Calciumcarbonat [Gew.-Teile] | 43,6 | 43,6 | 43,6 | 26,95 | 22,66 |
| Formtrennmittel [Gew.-Teile] | 0,9 | 0,9 | 0,9 | 1,0 | 0,9 |
| Glasrovings [Gew.-Teile] | – | – | – | 38,0 | 41,8 |
| Glasfasern [Gew.-Teile] | 20,0 | 20,0 | 20,0 | – | – |
| Wärmeformbeständig nach Martens, DIN 53 458 [°C] | 187 | 175 | 184 | 188 | 233 |
| Biegefestigkeit nach DIN 53 452 [N/mm²] | 134 | 130 | 132 | 172 | 161 |
| Schleudertest vor Lötbad [U/min] | > 40000 | > 40000 | > 40000 | > 40000 | > 40000 |
| nach Lötbad [U/min] | > 40000 | > 40000 | > 40000 | > 40000 | > 40000 |
| Aufdorntest vor Lötbad [%] | 1,48 | 1,70 | 1,61 | 1,50 | 1,87 |
| nach Lötbad [%] | 1,65 | 1,70 | 1,32 | 1,61 | 1,54 |
| Abrasionstest [Faktor] | 1,24 | 1,0 | 1,0 | 1,17 | 1,5 |

EP 0 245 208 B1

Herstellung der Härtermasterbatches 4 und 5

Die verwendbaren Verbindungen und Rohstoffe werden in den in Tabelle 3 angegebenen Mengen in eine 5-Liter-Laborkugelmühle eingewogen und 16 Stunden gemahlen.

Tabelle 3

| Härtermasterbatch Nr. | 4 | 5 |
|---|---|---|
| Glasfasern, gemahlen [Gew.-Teile] | 722 | 692 |
| Dicyandiamid [Gew.-Teile] | 244 | 244 |
| Beschleuniger 3 [Gew.-Teile] | 10 | - |
| Beschleuniger 4 [Gew.-Teile] | - | 40 |
| Formtrennmittel [Gew.-Teile] | 20 | 20 |
| Gasruss [Gew.-Teile] | 24 | 24 |

Die Herstellung der Pressmassen 6 bis 12 erfolgt analog der Herstellung von Pressmassen 1—3, indem alle Rohstoffe mit Ausnahme der Glasfasern von 4,5 mm Länge in eine 5-Liter-Laborkugelmühle eingewogen und 8 Stunden gemahlen werden.

Tabelle 4

| Pressmasse Nr. | 6 | 7 | 8 | 9 | 10 | 11 | 12 |
|---|---|---|---|---|---|---|---|
| Epoxidharz A [Gew.-Teile] | 15,6 | – | 23,0 | 23,0 | 23,0 | 23,0 | 23,0 |
| Epoxidharz D [Gew.-Teile] | – | 15,6 | – | – | – | – | – |
| Härtermasterbatch 1 [Gew.-Teile] | 8,4 | 8,4 | 12,5 | – | 12,5 | – | 12,5 |
| Härtermasterbatch 4 [Gew.-Teile] | – | – | – | 12,5 | – | – | – |
| Härtermasterbatch 5 [Gew.-Teile] | – | – | – | – | – | 12,5 | – |
| Calciumcarbonat [Gew.-Teile] | 60,0 | 20,0 | 38,6 | 43,6 | 21,8 | 43,6 | 25,0 |
| Talk [Gew.-Teile] | – | – | – | – | 21,8 | – | – |
| Wollastonit [Gew.-Teile] | – | – | 5,0 | – | – | – | – |
| Dolomit (Microdol 325) [Gew.-T.] | – | – | – | – | – | – | 18,6 |
| Formtrennmittel [Gew.-Teile] | 1,0 | 1,0 | 0,9 | 0,9 | 0,9 | 0,9 | 0,9 |
| Glasfasern, 4,5 mm [Gew.-Teile] | 15,0 | 20,0 | 20,0 | 20,0 | 20,0 | 20,0 | 20,0 |
| Glasfasern, gemahlen [Gew.-Teile] | – | 35,0 | – | – | – | – | – |
| Wärmeformbeständig nach Martens, DIN 53 458 [°C] | 172 | 169 | 176 | 167 | 178 | 180 | 172 |
| Biegefestigkeit nach DIN 53 452 [N/mm²] | 126 | 132 | 144 | 135 | 120 | 114 | 122 |
| Schleudertest vor Lötbad [U/min] | > 40000 | > 40000 | > 40000 | > 40000 | > 40000 | > 40000 | > 40000 |
| nach Lötbad [U/min] | > 40000 | > 40000 | > 40000 | > 40000 | > 40000 | > 40000 | > 40000 |
| Aufdorntest vor Lötbad [%] | 1,20 | 1,43 | 1,61 | 1,46 | 1,46 | 1,61 | 1,47 |
| nach Lötbad [%] | 1,35 | 1,57 | 1,65 | 1,63 | 1,43 | 1,73 | 1,82 |
| Abrasionstest [Faktor] | 1,0 | 1,1 | 1,3 | 1,0 | 1,0 | 1,0 | 1,2 |

## EP 0 245 208 B1

**Patentansprüche für die Vertragsstaaten: CH DE FR GB IT LI NL**

1. Epoxidharzformmasse, enthaltend
(a) ein Phenol- oder Kresolnovolakepoxidharz,
(b) Dicyandiamid als Härtungsmittel
(c) einen für die Härtung mit Dicyandiamid geeigneten Beschleuniger,
(d) 20 bis 70 Gew.-% Calciumcarbonat,
(e) 10 bis 60 Gew.-% Glasfasern, wobei die Menge der Komponenten (d) und (e) zusammen höchstens 80 Gew.-% beträgt, bezogen auf das Gesamtgewicht der Epoxidharzformmasse, und
(f) 0,2 bis 2,0 Gew.-% Formtrennmittel, bezogen auf das Gesamtgewicht der Epoxidharzformmasse.

2. Epoxidharzformmasse gemäss Anspruch 1, dadurch gekennzeichnet, dass sie ein Kresolnovolakepoxidharz enthält.

3. Epoxidharzformmasse gemäss Anspruch 1, dadurch gekennzeichnet, dass sie ein Phenol- oder Kresolnovolakepoxidharz und 0,1 bis 40 Gew.-%, bezogen auf die Gesamtmenge des Epoxidharzes, eines aromatischen Di- oder Polyglycidyläthers enthält.

4. Epoxidharzformmasse gemäss Anspruch 3, dadurch gekennzeichnet, dass sie als aromatischen Diglycidyläther Bisphenol A-diglycidyläther enthält.

5. Epoxidharzformmasse gemäss Anspruch 1, dadurch gekennzeichnet, dass sie pro Epoxidäquivalent 0,16 bis 0,5 Mol Dicyandiamid enthält.

6. Epoxidharzformmasse gemäss Anspruch 1, dadurch gekennzeichnet, dass sie pro Epoxidäquivalent 0,25 bis 0,35 Mol Dicyandiamid enthält.

7. Epoxidharzformmasse gemäss Anspruch 1, dadurch gekennzeichnet, dass sie als Beschleuniger ein Imidazol enthält.

8. Epoxidharzformmasse gemäss Anspruch 7, dadurch gekennzeichnet, dass sie 2-Aethylimidazol enthält.

9. Epoxidharzformmasse gemäss Anspruch 1, dadurch gekennzeichnet, dass sie mindestens 30 Gew.-% Calciumcarbonat und 0,1 bis 40 Gew.-% Kaolin, Wollastonit, Dolomit, Bariumsulfat, Talk, Glimmer oder Aluminiumoxidtrihydrat als weiteren Füllstoff enthält, wobei die Gesamtmenge der Füllstoffe höchstens 70% beträgt, bezogen auf das Gesamtgewicht der Epoxidharzformmasse.

10. Epoxidharzformmasse gemäss Anspruch 9, dadurch gekennzeichnet, dass sie mindestens 40 Gew.-% Calciumcarbonat und 0,1 bis 30 Gew.-% eines weiteren Füllstoffes enthält.

11. Epoxidharzformmasse gemäss Anspruch 9 oder 10, dadurch gekennzeichnet, dass sie als weiteren Füllstoff Kaolin enthält.

12. Epoxidharzformmasse gemäss Anspruch 1, dadurch gekennzeichnet, dass sie Glasfasern in Form von Glasrovings enthält.

13. Verwendung der Epoxidharzformmasse gemäss Anspruch 1 zur Herstellung von Kollektoren oder Schleifringkörpern.

14. Kollektoren oder Schleifringkörper, hergestellt unter Verwendung einer Epoxidharzformmasse gemäss Anspruch 1.

**Patentansprüche für den Vertragsstaat: ES**

1. Epoxidharzformmasse, enthaltend
(a) ein Phenol- oder Kresolnovolakepoxidharz,
(b) Dicyandiamid als Härtungsmittel
(c) einen für die Härtung mit Dicyandiamid geeigneten Beschleuniger,
(d) 20 bis 70 Gew.-% Calciumcarbonat,
(e) 10 bis 60 Gew.-% Glasfasern, wobei die Menge der Komponenten (d) und (e) zusammen höchstens 80 Gew.-% beträgt, bezogen auf das Gesamtgewicht der Epoxidharzformmasse, und
(f) 0,2 bis 2,0 Gew.-% Formtrennmittel, bezogen auf das Gesamtgewicht der Epoxidharzformmasse.

2. Epoxidharzformmasse gemäss Anspruch 1, dadurch gekennzeichnet, dass sie ein Kresolnovolakepoxidharz enthält.

3. Epoxidharzformmasse gemäss Anspruch 1, dadurch gekennzeichnet, dass sie ein Phenol- oder Kresolnovolakepoxidharz und 0,1 bis 40 Gew.-%, bezogen auf die Gesamtmenge des Epoxidharzes, eines aromatischen Di- oder Polyglycidyläthers enthält.

4. Epoxidharzformmasse gemäss Anspruch 3, dadurch gekennzeichnet, dass sie als aromatischen Diglycidyläther Bisphenol A-diglycidyläther enthält.

5. Epoxidharzformmasse gemäss Anspruch 1, dadurch gekennzeichnet, dass sie pro Epoxidäquivalent 0,16 bis 0,5 Mol Dicyandiamid enthält.

6. Epoxidharzformmasse gemäss Anspruch 1, dadurch gekennzeichnet, dass sie pro Epoxidäquivalent 0,25 bis 0,35 Mol Dicyandiamid enthält.

7. Epoxidharzformmasse gemäss Anspruch 1, dadurch gekennzeichnet, dass sie als Beschleuniger ein Imidazol enthält.

8. Epoxidharzformmasse gemäss Anspruch 7, dadurch gekennzeichnet, dass sie 2-Aethylimidazol enthält.

8

9. Epoxidharzformmasse gemäss Anspruch 1, dadurch gekennzeichnet, dass sie mindestens 30 Gew.-% Calciumcarbonat und 0,1 bis 40 Gew.-% Kaolin, Wollastonit, Dolomit, Bariumsulfat, Talk, Glimmer oder Aluminiumoxidtrihydrat als weiteren Füllstoff enthält, wobei die Gesamtmenge der Füllstoffe höchstens 70% beträgt, bezogen auf das Gesamtgewicht der Epoxidharzformmasse.

10. Epoxidharzformmasse gemäss Anspruch 9, dadurch gekennzeichnet, dass sie mindestens 40 Gew.-% Calciumcarbonat und 0,1 bis 30 Gew.-% eines weiteren Füllstoffes enthält.

11. Epoxidharzformmasse gemäss Anspruch 9 oder 10, dadurch gekennzeichnet, dass sie als weiteren Füllstoff Kaolin enthält.

12. Epoxidharzformmasse gemäss Anspruch 1, dadurch gekennzeichnet, dass sie Glasfasern in Form von Glasrovings enthält.

13. Verwendung der Epoxidharzformmasse gemäss Anspruch 1 zur Herstellung von Kollektoren oder Schleifringkörpern.

**Revendications pour les Etats contractants: CH DE FR GB IT LI NL**

1. Matière à mouler à base d'une résine époxydique, qui contient:
(a) une résine époxydique d'une novolaque dérivant du phénol ou d'un crésol,
(b) de la cyanoguanidine comme durcisseur,
(c) un accélérateur convenant pour le durcissement par la cyanoguanidine,
(d) de 20 à 70% en poids de carbonate de calcium,
(e) de 10 à 60% en poids de fibres de verre, la somme des quantités des composantes (d) et (e) représentant au plus 80% en poids par rapport au poids total de la matière à mouler époxydique, et
(f) de 0,2 à 2,0% en poids d'un agent de démoulage, pourcentage rapporté au poids total de la matière à mouler époxydique.

2. Matière à mouler à base d'une résine époxydique selon la revendication 1, caractérisée en ce qu'elle contient une résine époxydique dérivant d'une novolaque crésolique.

3. Matière à mouler à base d'une résine époxydique selon la revendication 1, caractérisée en ce qu'elle contient une résine époxydique dérivant d'une novolaque phénolique ou crésolique et de 0,1 à 40% en poids, par rapport à la quantite totale de la résine époxydique, d'un éther diglycidylique ou polyglycidylique aromatique.

4. Matière à mouler à base d'une résine époxydique selon la revendication 3, caractérisée en ce qu'elle contient, comme éther diglycidylique aromatique, de l'éther diglycidylique du bis-phénol A.

5. Matière à mouler à base d'une résine époxydique selon la revendication 1, caractérisée en ce qu'elle contient, par équivalent d'époxy, de 0,16 à 0,5 mol de cyanoguanidine.

6. Matière à mouler à base d'une résine époxydique selon la revendication 1, caractérisée en ce qu'elle contient, par équivalent d'époxy, de 0,25 à 0,35 mol de cyanoguanidine.

7. Matière à mouler à base d'une résine époxydique selon la revendication 1, caractérisée en ce qu'elle contient un imidazole comme accélérateur.

8. Matière à mouler à base d'une résine époxydique selon la revendication 7, caractérisée en ce qu'elle contient de l'éthyl-2 imidazole.

9. Matière à mouler à base d'une résine époxydique selon la revendication 1, caractérisée en ce qu'elle contient au moins 30% en poids de carbonate de calcium et, comme charge supplémentaire, de 0,1 à 40% en poids de kaolin, de wollastonite, de dolomite, de sulfate de baryum, de talc, de mica ou de trihydrate d'alumine, la quantité totale des charges représentant au plus 70% du poids total de la matière à mouler à base d'une resine époxydique.

10. Matière à mouler à base d'une résine époxydique selon la revendication 9, caractérisée en ce qu'elle contient au moins 40% en poids de carbonate de calcium et de 0,1 à 30% en poids d'une charge supplémentaire.

11. Matière à mouler à base d'une résine époxydique selon l'une des revendications 9 et 10, caractérisée en ce qu'elle contient contient du kaolin comme charge supplémentaire.

12. Matière à mouler à base d'une résine époxydique selon la revendication 1, caractérisée en ce qu'elle contient des fibres de verre sous la forme de stratifils.

13. Application de la matière à mouler à base d'une résine époxydique selon la revendication 1 à la fabrication de collecteurs ou de corps de bagues collectrices.

14. Collecteurs ou corps de bagues collectrices qui ont été fabriqués avec une matière à mouler à base d'une résine époxydique selon la revendication 1.

**Revendications pour l'Etat contractant: ES**

1. Matière à mouler à base d'une résine époxydique, qui contient:
(a) une résine époxydique d'une novolaque dérivant du phénol ou d'un crésol,
(b) de la cyanoguanidine comme durcisseur,
(c) un accélérateur convenant pour le durcissement par la cyanoguanidine,
(d) de 20 à 70% en poids de carbonate de calcium,
(e) de 10 à 60% en poids de fibres de verre, la somme des quantités des composantes (d) et (e) représentant au plus 80% en poids par rapport au poids total de la matière à mouler époxydique, et

(f) de 0,2 à 2,0% en poids d'un agent de démoulage, pourcentage rapporté au poids total de la matière à mouler époxydique.

2. Matière à mouler à base d'une résine époxydique selon la revendication 1, caractérisée en ce qu'elle contient une résine époxydique dérivant d'une novolaque crésolique.

3. Matière à mouler à base d'une résine époxydique selon la revendication 1, caractérisée en ce qu'elle contient une résine époxydique dérivant d'une novolaque phénolique ou crésolique et de 0 1 à 40% en poids, par rapport à la quantite totale de la résine époxydique, d'un éther diglycidylique ou polyglycidylique aromatique.

4. Matière à mouler à base d'une résine époxydique selon la revendication 3, caractérisée en ce qu'elle contient, comme éther diglycidylique aromatique, de l'éther diglycidylique du bis-phénol A.

5. Matière à mouler à base d'une résine époxydique selon la revendication 1, caractérisée en ce qu'elle contient, par équivalent d'époxy, de 0,16 à 0,5 mol de cyanoguanidine.

6. Matière à mouler à base d'une résine époxydique selon la revendication 1, caractérisée en ce qu'elle contient, par équivalent d'époxy, de 0,25 à 0,35 mol de cyanoguanidine.

7. Matière à mouler à base d'une résine époxydique selon la revendication 1, caractérisée en ce qu'elle contient un imidazole comme accélérateur.

8. Matière à mouler à base d'une résine époxydique selon la revendication 7, caractérisée en ce qu'elle contient de l'éthyl-2 imidazole.

9. Matière à mouler à base d'une résine époxydique selon la revendication 1, caractérisée en ce qu'elle contient au moins 30% en poids de carbonate de calcium et, comme charge supplémentaire, de 0,1 à 40% en poids de kaolin, de wollastonite, de dolomite, de sulfate de baryum, de talc, de mica ou de trihydrate d'alumine, la quantité totale des charges représentant au plus 70% du poids total de la matière à mouler à base d'une resine époxydique.

10. Matière à mouler à base d'une résine époxydique selon la revendication 9, caractérisée en ce qu'elle contient au moins 40% en poids de carbonate de calcium et de 0,1 à 30% en poids d'une charge supplémentaire.

11. Matière à mouler à base d'une résine époxydique selon l'une des revendications 9 et 10, caractérisée en ce qu'elle contient contient du kaolin comme charge supplémentaire.

12. Matière à mouler à base d'une résine époxydique selon la revendication 1, caractérisée en ce qu'elle contient des fibres de verre sous la forme de stratifils.

13. Application de la matière à mouler à base d'une résine époxydique selon la revendication 1 à la fabrication de collecteurs ou de corps de bagues collectrices.

**Claims for the Contracting States: CH DE FR GB IT LI NL**

1. An epoxide resin moulding composition, comprising
(a) a phenol or cresol novolak epoxide resin,
(b) dicyandiamide as a hardener,
(c) an accelerator suitable for hardening with dicyandiamide,
(d) 20 to 70% by weight of calcium carbonate,
(e) 10 to 60% by weight of glass fibres, the quantity of components (d) and (e) together not exceeding 80% by weight, relative to the total weight of the epoxide resin moulding composition and,
(f) 0.2 to 2.0% by weight of mould release agent relative to the total weight of the epoxide resin moulding composition.

2. An epoxide resin moulding composition according to claim 1, which contains a cresol novolak epoxide resin.

3. An epoxide resin moulding composition according to claim 1, which contains a phenol or cresol novolak epoxide resin and 0.1 to 40% by weight, relative to the total quantity of the epoxide resin, of an aromatic di- or polyglycidyl ether.

4. An epoxide resin moulding composition according to claim 3, which contains bisphenol A diglycidyl ether as the aromatic diglycidyl ether.

5. An epoxide resin moulding composition according to claim 1, which contains 0.16 to 0.5 mol of dicyandiamide per epoxide equivalent.

6. An epoxide resin moulding composition according to claim 1, which contains 0.25 to 0.35 mol of dicyandiamide per epoxide equivalent.

7. An epoxide resin moulding composition according to claim 1, which contains an imidazole as the accelerator.

8. An epoxide resin moulding composition according to claim 7, which contains 2-ethylimidazole.

9. An epoxide resin moulding composition according to claim 1, which contains at least 30% by weight of calcium carbonate and 0.1 to 40% by weight of kaolin, wollastonite, dolomite, barium sulfate, talc, mica or aluminium oxide trihydrate as a further filler, the total quantity of fillers not exceeding 70%, relative to the total weight of the epoxide resin moulding composition.

10. An epoxide resin moulding composition according to claim 9, which contains at least 40% by weight of calcium carbonate and 0.1 to 30% by weight of a further filler.

11. An epoxide resin moulding composition according to claim 9 or 10, which contains kaolin as a further filler.

12. An epoxide resin moulding composition according to claim 1, which contains glass fibres in the form of glass rovings.

13. The use of the epoxide resin moulding composition according to claim 1 for the manufacture of collectors or slipring bodies.

14. Collectors or slipring bodies, manufactured with the use of an epoxide resin moulding composition according to claim 1.

**Claims for the Contracting State: ES**

1. An epoxide resin moulding composition, comprising
(a) a phenol or cresol novolak epoxide resin,
(b) dicyandiamide as a hardener,
(c) an accelerator suitable for hardening with dicyandiamide,
(d) 20 to 70% by weight of calcium carbonate,
(e) 10 to 60% by weight of glass fibres, the quantity of components (d) and (e) together not exceeding 80% by weight, relative to the total weight of the epoxide resin moulding composition and,
(f) 0.2 to 2.0% by weight of mould release agent relative to the total weight of the epoxide resin moulding composition.

2. An epoxide resin moulding composition according to claim 1, which contains a cresol novolak epoxide resin.

3. An epoxide resin moulding composition according to claim 1, which contains a phenol or cresol novolak epoxide resin and 0.1 to 40% by weight, relative to the total quantity of the epoxide resin, of an aromatic di- or polyglycidyl ether.

4. An epoxide resin moulding composition according to claim 3, which contains bisphenol A diglycidyl ether as the aromatic diglycidyl ether.

5. An epoxide resin moulding composition according to claim 1, which contains 0.16 to 0.5 mol of dicyandiamide per epoxide equivalent.

6. An epoxide resin moulding composition according to claim 1, which contains 0.25 to 0.35 mol of dicyandiamide per epoxide equivalent.

7. An epoxide resin moulding composition according to claim 1, which contains an imidazole as the accelerator.

8. An epoxide resin moulding composition according to claim 7, which contains 2-ethylimidazole.

9. An epoxide resin moulding composition according to claim 1, which contains at least 30% by weight of calcium carbonate and 0.1 to 40% by weight of kaolin, wollastonite, dolomite, barium sulfate, talc, mica or aluminium oxide trihydrate as a further filler, the total quantity of fillers not exceeding 70%, relative to the total weight of the epoxide resin moulding composition.

10. An epoxide resin moulding composition according to claim 9, which contains at least 40% by weight of calcium carbonate and 0.1 to 30% by weight of a further filler.

11. An epoxide resin moulding composition according to claim 9 or 10, which contains kaolin as a further filler.

12. An epoxide resin moulding composition according to claim 1, which contains glass fibres in the form of glass rovings.

13. The use of the epoxide resin moulding composition according to claim 1 for the manufacture of collectors or slipring bodies.